# EUROPEAN PATENT APPLICATION

(11) **EP 4 386 584 A1**
(43) Date of publication of application: **19.06.2024**
(21) Application number: 23215450.0
(22) Date of filing: 11.12.2023
(51) Int. Cl.: G06F 17/18, G06N 3/00

(54) **SYSTEM FOR ANOMALY DETECTION AND PERFORMANCE ANALYSIS IN HIGH-DIMENSIONAL STREAMING DATA**

(30) Priority: 12.12.2022 US 202263431794 P
(71) Applicant: 3M Innovative Properties Company, Saint Paul, MN 55133-3427 (US)
(72) Inventor: Nguyen, Nitsan Ben-Gal, St. Paul, Minnesota, 33427 (US); Hagh-Shenas, Haleh, St. Paul, Minnesota, 33427 (US); Subramanian, Karthik, St. Paul, Minnesota, 33427 (US); Pikturna, Jesse T., St. Paul, Minnesota, 33427 (US); Keeler, Janna M., St. Paul, Minnesota, 33427 (US); Oliver, Elizabeth A., St. Paul, Minnesota, 33427 (US)
(74) Representative: Vossius & Partner Patentanwälte Rechtsanwälte mbB

(57) **Abstract**

Method for detecting anomalous data in a manufacturing line or live sensing application. The method includes computing a projection of new incoming data on a trained model and identifying potential anomalies by comparing a window for the incoming data to normal representation criteria based upon user-specified thresholds. The trained model is created by applying hoteling T2 statistics and Q-residual to clean up outliers from an historic time interval of data and calculating principal components of the data and choosing a subset of components which represent a variability in the data. A model deployment pipeline is generated from the trained model and which is capable of deploying machine learning or statistical models to an edge and cloud infrastructure associated with the manufacturing line or live sensing application.

## Description

### BACKGROUND

Manufacturing analytics is often plagued by the magnitude of streaming data as well as the complexity of having millions of parts, thousands of assembly lines, and customization for particular products. In large manufacturing sites, thousands of tags are transmitting from various parts of a manufacturing line at sub-second intervals. The complexity and magnitude of the streaming data makes it challenging to diagnose partial equipment failure or degradation prior to catastrophic failures, which result in the complete shutdown of the line and a tedious and slow root cause analysis for repair planning. Exacerbating this problem is the lack of labeled data which limits the application of any supervised learning algorithm.

### SUMMARY

Embodiments include a method for detecting anomalous data in a manufacturing line or live sensing application. The method includes computing a projection of new incoming data on a trained model and identifying potential anomalies by comparing a window for the incoming data to normal representation criteria based upon user-specified thresholds. Creating the trained model includes applying hoteling T2 statistics and Q-residual to clean up outliers from an historic time interval of data and creating the model by calculating principal components of the data and choosing a subset of components which represent a variability in the data. A model deployment pipeline is generated from the trained model and which is capable of deploying machine learning or statistical models to an edge and cloud infrastructure associated with the manufacturing line or live sensing application.

### BRIEF DESCRIPTION OF THE DRAWINGS

FIG. 1 is a block diagram illustrating receiving sensor data from a manufacturing line or live sensing application.
FIG. 2 is a block diagram of modules for processing data from a manufacturing line or live sensing application.
FIG. 3 is a graph illustrating data plotted on three variables (X1, X2, X3).
FIG. 4 is a graph representing the dimensionality of a real data set.
FIG. 5 is a graph illustrating R-squared, Q-squared across a number of principal components.

### DETAILED DESCRIPTION

Embodiments include a data and insights platform for anomaly detection on high-dimensional streaming manufacturing data. It leverages statistical analysis of the data in a windowed fashion and monitors the processes for any deviations from a model that has been built based on the normal dataset. It comprises normalized system modeling, time aggregation and windowing, anomaly detection, identifying times with highest anomaly scores, and a dashboard for creating an anomaly report for manufacturing operator diagnostics.

Embodiments also include a set of algorithms for utilizing online inferential sensing in a manufacturing setting. The algorithms described herein can be deployed through an online system to use real-time or near-real-time data aggregation from live equipment lines to enable technicians and engineers to optimize these manufacturing processes in real-time.

One of the advantages of these algorithms are their interpretability. In a highly complex environment in which humans and artificial intelligence need to work together to solve problems, models that are not black boxes and allow humans to understand and interpret how the predictions and detections have been made are exceedingly desirable and can quickly gain adoptions and trust. In addition, the interpretability allows for implementation of visualization and adding context around the detected anomalies to create impactful reports that could be monitored, understood, and translated to feasible action plans.

### System

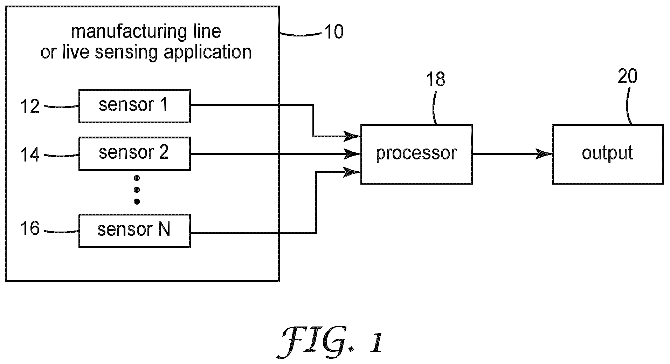

FIG. 1 is a block diagram illustrating receiving sensor data from a manufacturing line or live sensing application. A manufacturing line or live sensing application 10 includes a plurality of sensors 12, 14, and 16 that provide sensor data to a processor 18, which analyzes the data in real-time and provides a corresponding output 20, as described below. Only three sensors are shown for illustrative purposes; the manufacturing line or live sensing application would typically include many sensors

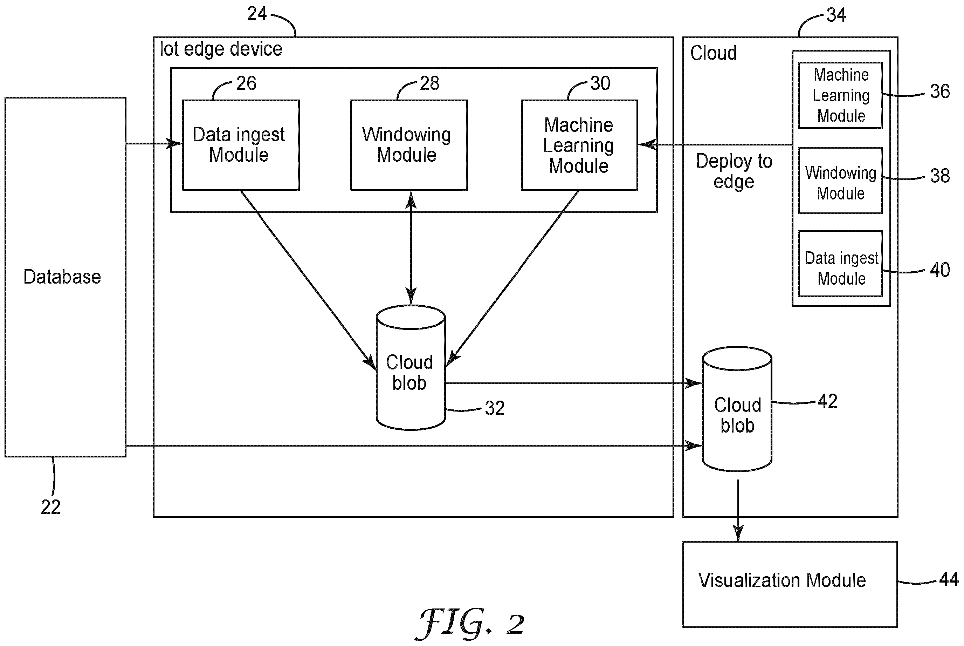

FIG. 2 is a block diagram of modules from processing data from a manufacturing line or live sensing application. An Iot edge device 24 includes a data ingest module 26, a windowing module 28, and a machine learning module 30, all of which interact with a cloud blob 32. A cloud 34 includes a machine learning module 36, a windowing module 38, a data ingest module 40, and a cloud blob 42 that provides information to a visualization module 44. A database 22 provides information to data ingest module 26 and cloud blob 42.

The overall end-to-end system is divided into three components:
1. **DATA PIPELINE:** The data pipeline pulls in records from the manufacturing plant or line in customizable time intervals defined by the user. The pipeline pulls in records according to the desired tags needed by the model. Additionally, tag data is contextualized by pulling metadata about the run from the Manufacturing Execution System (MES). The data ingestion module pulls data from the database and prepares it for processing by downstream modules.

Starting at a provided time (user configured), at a set frequency (configurable) this module will check the following:
1. If there is an active or past run corresponding with the provided time in the MES database, the appropriate data is retrieved from appropriate databases, and data nuances are addressed through data filtering and aggregations.
2. Data is temporarily saved to "EdgeBlob" storage, AKA Edge data storage.
3. Metadata describing the run will also be written out to the EdgeBlob.
4. Using data from the temporary storage on "Edge Blob", larger windows of data are created for visualization and which provides additional context beyond the data most recently pulled from the upstream databases.
5. Following this, the provided time will be incremented by the specified frequency and the module will wait until this time is later than current time before pulling the next increment of data.
6. Data expires and is removed from the "Edge Blob" after it exceeds the window size (for example data, 6.5 hours old will be removed if the window size for visualization is 6 hours). The module can be configured to duplicate the data in the "EdgeBlob" to a cloud environment if networking from the edge device allows, though this is not a requirement.

2. **MACHINE LEARNING (ML) PIPELINE:** The algorithm created for the data science process is operationalized using an MLOPS tool from a cloud provider. The ML Pipeline encapsulates the core logic of the algorithm and creates the necessary infrastructure to convert the algorithm into a consumable service (RESTful service). The ML Pipeline ensures that any new code update to the algorithm automatically triggers the pipeline and creates the final binaries for the model.

3. **DEVOPS PIPELINE:** The Data and ML Pipelines both use Azure edge modules. Essentially, these edge modules are Docker containers that are managed by the Azure IoT runtime. In order to deploy these modules onto the edge, Azure DevOps pipelines are used to build the module images, push these images into a container registry, and then deploy them from the container registry onto the edge device.

The Edge PCA module is deployed via one Azure DevOps pipeline (the ML Deployment Pipeline) and the other modules are deployed via another Azure DevOps pipeline (the Data Deployment Pipeline). Azure LogicApps orchestrate both pipelines so that they run whenever changes are pushed to the DevOps repos, or in the case of the ML Pipeline, whenever a new "edgepca" model is registered in the Azure ML Workspace.

The DevOps pipelines picks up the algorithms created by the ML Pipeline step and deploys this algorithm to the Edge for inference purposes.

### Methods

The following are definitions of terms. Online in this case refers to data that is coming into the algorithm in real-time, from sensors on the manufacturing lines (or other live sensing applications), whereas offline refers to settings and sensor data which is stored on a server (cloud or edge) for later access.

Examples of statistical algorithms useful in such applications include Principal Component Analysis (PCA) melded with a statistical outlier detection approach, such as Hotelling's T-Squared, SPE-statistic or Q-statistic, or Mahalonobis Distance. For machine learning approaches, algorithms such as Isolation Forest, Univariate Time Series algorithms such as GSHESD and STL, and related approaches were investigated and could be deployed. For advanced AI, Autoencoders and DAGMM could be used for even more advanced approaches to analytics.

The algorithms use one of these listed, although all could be used. Specifically, addressed herein is the use of Principal Component Analysis combined with Hotelling's T-Squared and Q-Statistic based outlier detection and real-time diagnostics from online inferential sensing. This approach was prioritized based on explainability of the inferences, lack of labelled data, and deployability within a constrained timeframe.

The reason Principal Component Analysis is often useful in analyzing manufacturing is that the data usually has the following characteristics.
1. The measured variables are not statistically independent.
2. There are significant levels of missing data and bad data.
3. The happenstance data does not show causal relationships.
4. The physical dimensionality is often very high because of measuring a lot of variables.
5. There is often a high level of noise compared to the signals because of operating with low variation.

When Principal Component Analysis is applied to manufacturing data for the purpose of detecting anomalies or unfavorable operating specifications, historical sensor data is first used to define a lower dimensional latent space. Then, online sensor readings (or offline readings) are evaluated to determine how well they project onto the lower dimensional space defined in training and where the online sensor readings fall in that projected space. If either the online sensor readings do not map well onto the lower dimensional space, or they do map onto the lower dimensional space but do not fall in the range of "favorable" data on that space, the point is identified as a potential anomaly.

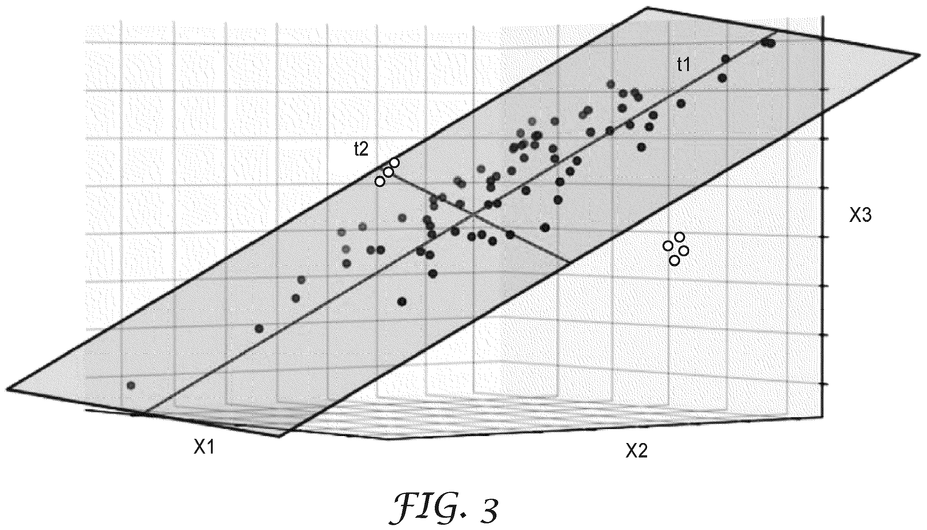

As an illustrative example, the plot in FIG. 3 shows data plotted on three variables (X1,X2,X3). The data exists in three dimensions but is close to planar data. It is projected onto the lower dimensional space (t1,t2). The dark points are intended to show normal variation. The four white points outside the box of dark points are points that do not project well onto the (t1,t2) plane. The three white dots near t2 and in the box of dark points are outside of the normal variation but on the plane. In a PCA model, both sets of white points could be identified as anomalies. Applied to a real process, the physical space would typically have many more variables and the latent space could have more variables too. This graph provides a visual representation but does not accurately represent the dimensionality of a real data set.

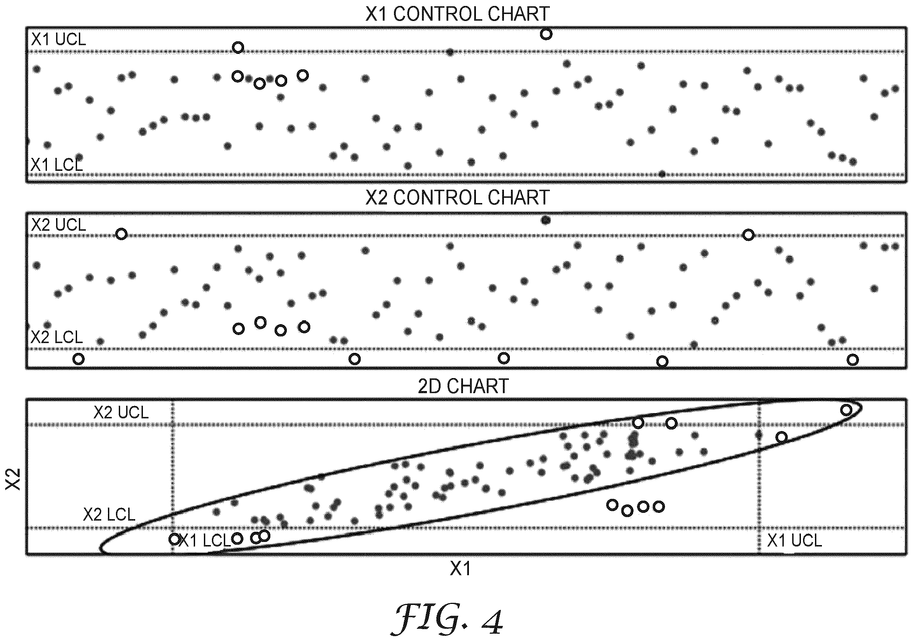

FIG. 4 demonstrates the concept. If a person only looked at X1 or X2, the white points within the dashed lines containing the dark points seem normal. By understanding the relationship between X1 and X2, it is easier to see those white points as anomalies -- they do not fall on the linear relationship. The white points outside of or on the dashed lines containing dark points are then also anomalies insofar as they fall at the far ends of the linear relationship. This an illustrative example of how PCA should be applied to manufacturing data. It is not a principal component analysis. PCA takes advantage of the collinearity and lower rank phenomena between variables, allowing more efficient pinpointing of anomalous behavior. Traditional control methodology as illustrated in FIG. 4 results in a large number of outliers (the white points outside of or on the dashed lines containing dark points) being flagged and alarmed, but not identifying the multivariate anomalies (the white points within the dashed lines containing the dark points) which show unusual behavior to the system as a whole, rather than a slight overage of prescribed limits. In two or three variables this is easy to see. When considering a manufacturing line, the system and method are considering 1000s of interconnected and interdependent variables, and dimensionality reduction is critical.

Next, below is a sample process for designing such an algorithm for a manufacturing dataset, along with alternative implementations.

### Algorithm Phases:

### 1. Automated Cleaning

In a traditional PCA model for anomaly detection the user is called upon to investigate each data point that appears to be an outlier and decide as to whether to include that data point in the training set. Normally, there are tools provided to help users focus on points most likely to be anomalous. Labeled data can assist with this process, but labeled data is not always available from manufacturing data due to some plant data practices.

Automated cleaning is a desirable first step to enabling prediction in such cases where extensive labeled data is not available. One such automated data cleaning technique was developed and deployed for a manufacturing project. One risk of automated cleaning is that of eliminating some good data from the training set and retaining data that does not conform to desired plant operation. This risk was present in the deployed version, and this risk can be evaluated to see the impact it has on anomaly detection. If such automated cleaning is effective, it would accelerate the scaling of this technology by eliminating a time-consuming manual process.

The objective of automated cleaning is not to make a "better" cleaning method than a labor-intensive manual cleaning. It is to create a system that scales and is useful in a manufacturing environment. A significant time savings can be achieved by using an automated and effective cleaning method even if it is imperfect. The resultant anomaly detection system could rapidly deliver value. The alternatives, requiring either full labeling (a very time-consuming process) or no automated anomaly detection, result in paths to solution that are slower and more resource intensive.

The following are a number of methods for automated data cleaning that could be deployed. These include:
a. allowing end-users to auto-label a subset of input data and then "autotune" the method;
b. allowing end-users to manually label a subset of input data and then "auto-label" the rest;
c. allowing end-users to completely manually label an initial data set and then develop rules for other manufacturing cases under the platform.

The method which was deployed was a multivariate cleaning method which utilized the same statistical methodology used to identify outliers in the test set to first remove outliers from the training data set, at a stricter threshold than for the training outlier detection.

### 2. Standardizing with a Standard or Robust Scaler

With data on different scales and having different mean values, it is important to scale the data and center the means so that the scale of a variable does not cause it to be weighted inappropriately by the model. This is a standard data preparation step in statistical and machine learning methodologies.

### 3. Model training with statsmodels.multivariate.pca.PCA

This python class was selected for implementation because it includes an option for filling missing data with an expectation maximization (EM) algorithm. Another python class and algorithm would require a way to handle missing data, which is a common phenomenon in manufacturing datasets.

Simply dropping entire observations is not advised because as datasets grow, the practice of dropping entire observations can lead to excessive loss of data.

### 4. Identifying the optimal number of principal components

An objective is to fit the variation in the data well such that the model predicts future data from the same distribution. Selecting a reasonable number of latent variables such that the multivariate data is well-described by the new coordinate system is important in models based on PCA.

R² is the correlation to the training set. Q² is the correlation to the test set. R² will always increase with increasing latent variables (#LVs ≤ # measured variables), and for any number of latent variables R² will be larger than Q².

### Methods for choosing the number of latent variables:

It is common practice in chemometrics to select the number of latent variables when either there is an "elbow" in the R² vs number of components curve or when Q² is maximized.

### 1. Diminishing returns on R²

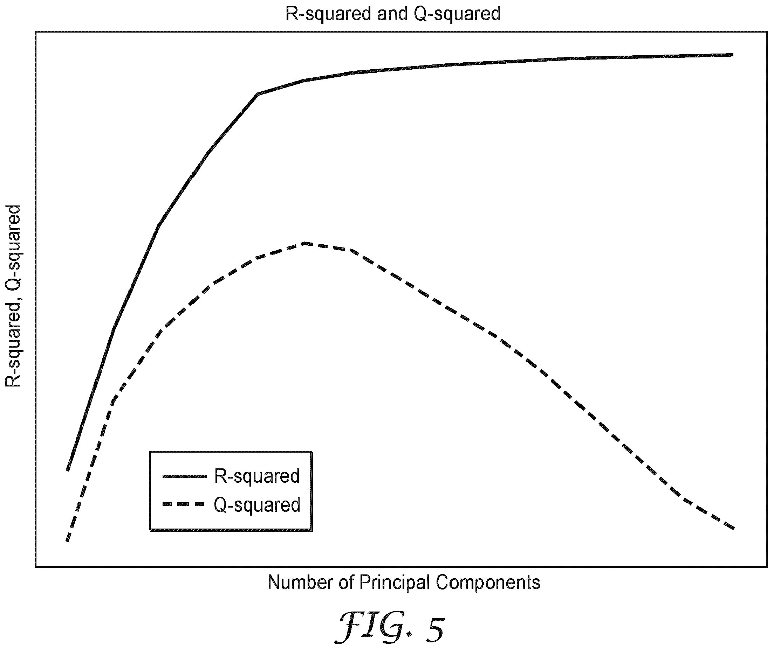

Under this method there is no single numerical value of R² that a user should target for every data set, nor is there any rule as to what constitutes an "elbow" in the curve. This method depends on a practitioner's judgement and experience. In the plot shown in FIG. 5, different users might select different number of principal components.

### 2. Q²

Using the Q² method, many data sets will show an increasing Q² such that the curve goes through a maximum and then decreases again. This behavior is not strictly necessary. Where Q² does achieve a maximum, selecting the number of principal components using this method might result in a different number of latent variables than would be selected under another method. Sometimes, it is useful to look for changes in the difference between the R²and Q² curves, a widening gap, for example.

### 3. Practical considerations

In the end, PCA is a dimensionality reduction technique. It will work best when there are substantial levels of multicollinearity in the data but can be considered whenever a person is dealing with multivariate data and the variables are not all independent. In ideal use, it should result in a sizable reduction in the number of variables used to describe a data set. Just as in polynomial regression, Occam's razor applies, and simpler models are often preferred. Whether the application is anomaly detection or clearly summarizing and displaying relationships in the data, the first few principal components are often the most heavily used. It is not always critical to use the optimal number of latent variables for a model to be useful, but implementations should strive to be as precise as possible in selecting the number of latent variables.

### 5. Anomaly Detection

Once a PCA model is built based on training data, new data can be evaluated against that model to determine whether the new data (1) is well described by the lower-dimensional space defined by the PCA model and (2) projects onto the lower dimensional space near the training data. New data are evaluated against both of these criteria. If the new data does not project onto the lower dimensional space as well as the training data or if it does project onto that space but is far from the region of this subspace occupied by the training data, the data point is labeled as an anomaly and diagnostic guidance is generated.
For both criteria, thresholds determine whether data are labeled as normal or anomalous. The user can adjust those thresholds to maximize utility. In some applications, users might be most interested in sensitivity. In others, accuracy might matter more. It is important to balance the user's need to detect most anomalies vs. the user's tolerance for false alarms.

### 6. Model Retraining

After deploying a model to production, it is often the case that the distribution of future observed features changes compared to the training dataset. These changes could be due to a variety of reasons for example maintenances regularly performed on the equipment generating the features or typical degradations of the mechanical parts. Therefore, the model's predictive performance degrades over time. Model retraining is utilized to address the model drift and mitigate its effect on the predictive performance. In the above algorithm, the model retraining could be performed on a regular basis through the same process that generated the original model.

## Claims

1. A method for aggregating real-time streaming data within a time window, comprising steps of:
iteratively collecting a time series data within a time interval from a time-series sensor data and a manufacturing metadata;
cleaning up the time-series data;
aggregating the time-series data;
transforming the time-series data according to parameters by which a corresponding training data had been transformed; and
creating groupings of data from the cleaned data to provide context to visualizations of the cleaned data.

2. A method for creating a trained model without a normal-state dataset, comprising steps of:
applying hoteling T2 statistics and Q-residual to clean up outliers from an historic time interval of data;
creating a model by calculating principal components of the data and choosing a subset of components which represent a variability in the data; and
generating from the model a model deployment pipeline which is capable of deploying machine learning or statistical models to an edge and cloud infrastructure associated with a manufacturing line or live sensing application.

3. A method for detecting anomalous data, comprising steps of:
computing a projection of new incoming data on the model created according to claim 2; and
identifying potential anomalies by comparing a window for the incoming data to normal representation criteria based upon user-specified thresholds.

4. The method of claim 3, further comprising displaying on a dashboard differences between the anomalies and the training data in multiple tags, including the tags that accounted for a largest difference from average.

5. The method of claim 4, further comprising displaying diagnostic information for a type of the anomalies and residual to the model produced in training.
